# EUROPÄISCHE PATENTSCHRIFT

(11) **EP 2 308 687 B1**
(45) Veröffentlichungstag und Bekanntmachung des Hinweises auf die Patenterteilung: **17.12.2014**
(21) Anmeldenummer: 10013285.1
(22) Anmeldetag: 04.10.2010
(51) Int. Cl.: B42D 15/00, B42D 25/00

(54) **Manipulationssicheres Identifikationsdokument und Herstellungsverfahren desselben**
Identification document secure against manipulation and manufacturing method for the same
Document d'identification doté d'une sécurité contre la manipulation et procédé de fabrication d'un tel

(30) Priorität: 08.10.2009 DE 102009048805
(43) Veröffentlichungstag der Anmeldung: 13.04.2011
(73) Patentinhaber: Mühlbauer GmbH & Co. KG., 93426 Roding (DE)
(72) Erfinder: Walther, Ronny, 93426 Roding (DE); Wanjek, Michael, 93149 Nittenau (DE)
(74) Vertreter: Schmidt, Steffen J.

(56) Entgegenhaltungen:
- US-A1- 2004 023 009
- US-A1- 2005 001 419

## Beschreibung

### Hintergrund

Hier wird ein Identifikationsdokument mit verbesserter Sicherheit gegen Manipulation beschrieben. Weiterhin wird ein Verfahren zum Herstellen eines Identifikationsdokumentes mit erleichterter Erkennbarkeit von Manipulation an dem Identifikationsdokument beschrieben. Insbesondere sollen Manipulationen an einem Identifikationsdokument oder Fälschungen eines Identifikationsdokumentes leichter erkannt werden können oder schwieriger vorzunehmen sein.

Unter einem hier beschriebenen Identifikationsdokument sind Reisepässe, Personalausweise, Führerscheine, Visa, Geld-, Kreditkarten, Etiketten, Zutrittsausweise, etc. verstanden.

Aus dem Stand der Technik sind vielfältige Sicherheitselemente bekannt, so wird zum Beispiel in Dokument DE 10 2008 036 402 B3 ein goniolumineszentes Sicherheitselement und ein Verfahren zu dessen Herstellung beschrieben. Dieses Sicherheitselement umfasst ein erstes Element und ein das erste Element zumindest teilweise überlappendes zweites Element. Das erste Element umfasst erste Lumineszenzmittel. Das zweite Element ist einer Betrachtungsseite des Sicherheitselements zugewandt und umfasst ferner ein orientierungsabhängiges Transmissions- und / oder Reflexionsvermögen, so dass bei einer Betrachtung während einer Anregung einer Lumineszenz der Lumineszenzmittel abhängig von einer Orientierung der Betrachtung durch das zweite Element eine optische Veränderungen wahrnehmbar ist.

In Dokument US 2005/0001419 A1 (das den Oberbegriff von Anspruch 1 offenbart) wird ein Verfahren zum Lasergravieren eines Dokuments beschrieben. Das zu gravierende Dokument umfasst eine Deckschicht und eine oder mehrere darunterliegende Farbschichten. Die Farbschichten weisen dabei unterschiedliche Farben und Anordnungen von Farben auf. Mittels eines Lasers können dann Öffnungen in der undurchsichtigen Deckschicht und in den Farbschichten erzeugt werden, so dass gewünschte Farbschichten selektiv freigelegt werden können. Durch eine geeignete Anordnung der Öffnungen ist es somit möglich ein Bild oder Text darstellen.

In Dokument US 2004/0023009 A1 wird ein graviertes Blatt und ein geeignetes Herstellerfahren beschrieben.

Allerdings werden Identifikationsdokumente heute häufig bis auf Personalisierungsdaten zentral gefertigt und anschließend dezentral, zum Beispiel auf Meldestellen, bei Behörden oder in Unternehmen, die zur Ausstellung derartiger Wert- und Sicherheitsdokumente berechtigt sind, mit einer Personalisierung versehen. Bei der Personalisierung werden den jeweiligen Inhaber des Wert- und Sicherheitsdokuments individuell bezeichnende Text-, Zahlen- und / oder Bilddaten in das Identifikationsdokument eingetragen. Bei diesen Daten handelt es sich zum Beispiel um Name und Anschrift des Inhabers, Geburtsdatum, Geburtsort, eine Photographie des Inhabers, biometrische Daten des Inhabers, etc. Diese Text-, Zahlen- und / oder Bilddaten sind herkömmlicherweise dann von einem Betrachter unmittelbar lesbar.

### Problem

Für derartige Identifikationsdokumente bestehen stets steigende Anforderungen an die Manipulationssicherheit und Manipulationserkennbarkeit. Diese Identifikationsdokumente sollen auch kostengünstig, schnell und zuverlässig herstellbar sein.

### Vorgeschlagene Lösung

Als Lösung hierfür wird ein Identifikationsdokument gemäß Anspruch 1 mit einem eine Oberfläche aufweisenden Substrat und einer mit der Oberfläche des Substrates verbundenen Laminierfolie vorgeschlagen. Die der Laminierfolie zugewandte Oberfläche des Substrates trägt, zumindest bei Beleuchtung durch Tageslicht mit bloßem Auge erkennbare, erste Text-, Zahlen- und / oder Bilddaten sowie einen ersten Flächenbereich mit einer fluoreszierenden Substanz. Die Substanz fluoresziert bei Anregung mit Licht in einem bestimmten Wellenlängenbereich mit bloßem Auge erkennbar farbig. Die Laminierfolie hat einen zweiten Flächenbereich, der zweite Text-, Zahlen- und / oder Bilddaten trägt. Die zweiten Text-, Zahlen- und / oder Bilddaten sind so tief in eine Licht in einem bestimmten Wellenlängenbereich blockierende oder zumindest abschwächende Schicht der Laminierfolie eingraviert, dass deren blockierende oder zumindest abschwächende Wirkung soweit verringert ist, dass die zweiten Text-, Zahlen-und / oder Bilddaten bei Beleuchtung mit Licht eines die fluoreszierende Substanz des ersten Flächenbereiches zur Fluoreszenz anregenden Wellenlängenbereichs mit bloßem Auge erkennbar sind. Der erste Flächenbereich der Oberfläche des Substrates und der zweite Flächenbereich der Laminierfolie überdecken einander zumindest teilweise.

Zudem erstreckt sich die Licht in einem bestimmten Wellenlängenbereich blockierende Schicht über die gesamte Laminierfolie und der bestimmte Wellenlängenbereich der Licht blockierenden oder zumindest abschwächenden Schicht stimmt zumindest teilweise mit dem Wellenlängenbereich überein, bei dem die fluoreszierende Substanz des ersten Flächenbereiches mit bloßem Auge erkennbar farbig fluoresziert.

### Ausgestaltungen und Eigenschaften

Manipulationen an dem Identifikationsdokument oder Fälschungen eines Identifikationsdokumentes können durch diese Maßnahmen leichter erkannt werden, oder sind schwieriger vorzunehmen, da sowohl die Laminierfolie (das Laminat) als auch das Substrat Daten tragen, die für das Identifikationsdokument relevant sind. Außerdem bildet das Laminat mit dem Substrat eine integrale Einheit.

Zur Personalisierung des Identifikationsdokumentes wird auf dem Substrat zum Beispiel mit fluoreszierender Tinte eine abgegrenzte Fläche bedruckt. Diese fluoreszierende Tinte auf dem Substrat hat die Eigenschaft, bei Beleuchtung mit Tageslicht zumindest nahezu unsichtbar zu sein, aber unter Anregung durch Licht in einem bestimmten Wellenlängenbereich farbig zu fluoreszieren.

Da zumindest ein Teil der für das Identifikationsdokument relevanten Informationen (Daten) auch im Laminat vorhanden sind, ist dieser Teil des Identifikationsdokuments auch eindeutig personalisiert. Dabei sind zumindest ein Teil der Informationen, die das Substrat trägt, entweder als Dublette oder lediglich einfach auch dem Laminat zugeordnet. Dadurch sind Fälschungen oder Manipulationen am Laminat oder am Substrat des Identifikationsdokumentes durch Vergleich zwischen der auf oder in dem Substrat enthaltenen Information und der an oder im Laminat enthaltenen Information leicht erkennbar. Somit wirkt das Laminat mit den in ihm enthaltenen, für das Identifikationsdokument relevanten Informationen (Daten) als Sicherheitsfolie, die für das Identifikationsdokument zusätzliche Sicherheit bringt.

Die Gravurtiefe kann stufenlos oder in diskreten Schritten, zum Beispiel durch Veränderung der Betriebsparameter eines zum Gravieren verwendeten Lasers, variiert werden und kann zum Beispiel etwa 5% bis etwa 35% der Dicke dieser Schicht betragen. Die vorstehenden Angaben sind als Beispiele zu verstehen; in konkreten Anwendungen können die abgetragenen Bereiche der Laminierfolie, also die Gravurtiefe, hiervon auch abweichen.

Insgesamt ist die Gravurtiefe in der Schicht jedenfalls so zu bemessen, dass einerseits die Daten bei Beleuchtung mit Tageslicht im Verhältnis zu ihrer Umgebung auf der Oberfläche der Laminierfolie zumindest nahezu nicht sichtbar sind und andererseits die Daten bei Beleuchtung mit Licht im Fluoreszenz anregenden Wellenlängenbereich mit bloßem Auge gut erkennbar sind.

Die in dem zweiten Flächenbereich befindlichen zweiten Text-, Zahlen- und / oder Bilddaten können als Graustufenbild in die Licht in einem bestimmten Wellenlängenbereich blockierende oder zumindest abschwächende Schicht der Laminierfolie eingraviert sein.

Sowohl das Substrat als auch die Laminierfolie tragen damit für das Identifikationsdokument relevante Text-, Zahlen- und / oder Bilddaten und bilden zusammen eine integrale Einheit.

Die Laminierfolie kann an einer oder beiden Oberflächen eine zusätzliche Beschichtung aufweisen. Diese zusätzliche Beschichtung kann zum Beispiel ein Metallspiegel oder eine Metallisierungsschicht (zum Beispiel aus Aluminium) sein. Die Laminierfolie ist entweder (zumindest abschnittsweise) transparent oder opak. Durch das Gravieren wird die Laminierfolie und, sofern vorhanden, die zusätzliche Beschichtung in ihrer Topologie modelliert. Damit wird die unterschiedliche Durchlässigkeit der Laminierfolie für das fluoreszierende Licht erreicht.

Neben den bei Tageslicht mit bloßem Auge erkennbaren ersten Daten können zusätzlich mit bloßem Auge nicht sichtbare Daten auf dem Substrat aufgebracht sein. Dies können Daten sein, die den ersten Daten vergleichbar sind und mit einem Druckverfahren / einer Druckerfarbe aufgebracht sind, so dass sie in einem von dem UV-Bereich abweichenden Wellenlängenbereich (zum Beispiel im IR-Bereich) sichtbar sind.

Außerdem wird ein Verfahren gemäß Anspruch 7 zur Herstellung eines Identifikationsdokumentes mit einem Substrat und einer Laminierfolie vorgeschlagen, mit folgenden Schritten: (i) Bereitstellen des Substrates, (ii) Bedrucken des Substrates mit zumindest bei Beleuchtung durch Tageslicht mit bloßem Auge erkennbaren ersten Text-, Zahlen- und / oder Bilddaten, (iii) Beschichten des Substrates in einem ersten Flächenbereich mit einer fluoreszierenden Substanz, die unter Anregung mit Licht in einem bestimmten Wellenlängenbereich mit bloßem Auge erkennbar farbig fluoresziert, (iv) Bereitstellen einer Laminierfolie wobei die Laminierfolie eine Licht in einem bestimmten Wellenlängenbereich blockierende oder zumindest abschwächende Schicht aufweist, die sich über die gesamte Laminierfolie erstreckt und wobei der bestimmte Wellenlängenbereich der Licht blockierenden oder zumindest abschwächenden Schicht zumindest teilweise mit dem Wellenlängenbereich übereinstimmt, bei dem die fluoreszierende Substanz des ersten Flächenbereiches mit bloßem Auge erkennbar farbig fluoresziert, (v) Eingravieren von zweiten Text-, Zahlen- und / oder Bilddaten in einen zweiten Flächenbereich der Laminierfolie, wobei die in den zweiten Flächenbereich eingravierten Text-, Zahlen- und / oder Bilddaten so tief in eine Licht in einem bestimmten Wellenlängenbereich blockierende oder zumindest abschwächende Schicht der Laminierfolie eingraviert werden, dass die blockierende oder zumindest abschwächende Wirkung der Schicht soweit verringert ist, dass die zweiten Text-, Zahlen- und / oder Bilddaten bei Beleuchtung mit Licht eines die fluoreszierende Substanz des ersten Flächenbereiches zur Fluoreszenz anregenden Wellenlängenbereichs mit bloßem Auge erkennbar sind, und (vi) Laminieren der Laminierfolie auf das Substrat, so dass der erste Flächenbereich des Substrates und der zweite Flächenbereich der Laminierfolie einander zumindest teilweise überdecken.

Dabei können die vorstehend angegebenen Schritte in unterschiedlichen Reihenfolgen ausgeführt werden: Zum einen kann die angegebene Reihenfolge gewählt werden. Andererseits können auch die Schritte (ii) und (iii) vertauscht werden. Zusätzlich oder statt dessen können auch die Schritte (v) und (vi) vertauscht werden.

Der erste Flächenbereich mit der fluoreszierenden Substanz kann dabei so gestaltet werden, dass er bei Beleuchtung durch Tageslicht im Verhältnis zu seiner Umgebung auf dem Substrat zumindest nahezu nicht sichtbar ist.

Die in den zweiten Flächenbereich eingravierten zweiten Text-, Zahlen- und / oder Bilddaten können nur so wenig tief in die Licht in einem bestimmten Wellenlängenbereich blockierende oder zumindest abschwächende Schicht der Laminierfolie eingraviert werden, dass sie bei Beleuchtung mit Tageslicht im Verhältnis zu ihrer Umgebung auf der Laminierfolie zumindest nahezu nicht sichtbar sind.

Die in den zweiten Flächenbereich eingravierten zweiten Text-, Zahlen- und / oder Bilddaten können als Graustufenbild in die Licht in einem bestimmten Wellenlängenbereich blockierende oder zumindest abschwächende Schicht der Laminierfolie eingraviert werden. Abhängig davon, wie tief eine Stelle in die Schicht in dem zweiten Flächenbereich eingraviert wird, wird die fluoreszierende Substanz mehr oder weniger intensiv fluoreszierend sichtbar. Hieraus ergibt sich das sichtbare Graustufenbild. Allerdings ist der Begriff Graustufenbild insofern irreführend, da die Farbe der in dem zweiten Flächenbereich sichtbaren zweiten Text-, Zahlen- und / oder Bilddaten davon abhängt, in welcher Farbe die fluoreszierende Substanz leuchtet. Genauer gesagt handelt es sich um eine monochromatische Darstellung. Wenn die Tiefe der Gravur nicht variiert wird, entsteht ein reiner Hell / Dunkeleffekt ("Schwarz / Weiß-Effekt"). Dieser eignet sich insbesondere bei der Darstellung von Text- und Zahlendaten, während bei Bilddaten eine monochromatische Grauwertdarstellung vorteilhaft sein kann.

Die in den zweiten Flächenbereich eingravierten zweiten Text-, Zahlen- und / oder Bilddaten können eine Kopie oder eine Ergänzung zu wenigstens einem Teil der auf das Substrat gedruckten ersten Text-, Zahlen- und / oder Bilddaten sein. Dabei kann die Kopie der Daten im zweiten Flächenbereich entweder etwa die gleichen Abmessungen wie die Daten auf dem Substrat haben, oder die Kopie der Daten im zweiten Flächenbereich haben von den Daten auf dem Substrat abweichende Abmessungen (größer oder kleiner).

Die zweiten Text-, Zahlen- und / oder Bilddaten können als Graustufenbild unter Verwendung eines Lasers in die Schicht der Laminierfolie eingraviert werden, wobei sich die Schicht auf der von dem Substrat abgewandten Seite der Laminierfolie oder bei einer mehrlagigen Laminierfolie in deren Inneren befinden kann. Die Schicht kann sich auch auf der dem Substrat zugewandten Seite der Laminierfolie befinden.

Sowohl das Substrat als auch die Laminierfolie tragen also für das Identifikationsdokument relevante Text-, Zahlen- und / oder Bilddaten und sind zu einer integralen Einheit laminiert.

Weitere Ziele, Merkmale, Vorteile und Anwendungsmöglichkeiten ergeben sich aus der nachfolgenden Beschreibung von nicht einschränkend zu verstehenden Ausführungsbeispielen des Identifikationsdokumentes und den zugehörigen Zeichnungen.
Fig. 1 zeigt ein Substrat eines Identifikationsdokumentes in einer schematischen Draufsicht.
Fig. 2 zeigt eine Laminierfolie des Identifikationsdokumentes in einer schematischen Draufsicht.
Fig. 2a zeigt die Laminierfolie des Identifikationsdokumentes in einer schematischen seitlichen stark vergrößerten Schnittansicht.
Fig. 3 zeigt das zusammenlaminierte Identifikationsdokument unter Bestrahlung mit Tageslicht.
Fig. 4 zeigt das zusammenlaminierte Identifikationsdokument unter Bestrahlung mit UV-Licht.
Fig. 5 erläutert ein Verfahren zur Herstellung eines Identifikationsdokumentes.

In den Fig. 6 - 8 sind weitere Varianten des Verfahrens zur Herstellung eines Identifikationsdokumentes dargestellt.

### Detaillierte Beschreibung von Ausführungsvarianten

In den Zeichnungen ist mit dem Bezugszeichen ID ein Identifikationsdokument bezeichnet, das ein Substrat 10 in Form einer etwa rechteckigen im Wesentlichen ebenen Karte hat und eine mit dem Substrat 10 verbundene Laminierfolie 12, deren Flächen-Abmessungen im vorliegenden Beispiel mit denen des Substrates übereinstimmen, aber davon auch abweichen können, indem die Laminierfolie 12 größer als das Substrat 10 ist.

Das Substrat und auch die Laminierfolie können eines oder mehrere der folgenden Materialien enthalten: Polyethylen (PE), Polyvinylchlorid (PVC), Polyethylenterephthalat (PET) oder Glykol-modifiziertes Polyethylenterephthalat (PETG), Polyethylennaphthalat (PEN), AcrylnitrilButadien-Styrol-Copolymerisat (ABS), Polyvinylbutyral (PVB), Polymethylmethacrylat (PMMA), Polyimid (PI), Polyvinylalkohol (PVA), Polystyrol (PS), Polyvinylphenol (PVP), Polypropylen (PP), Polycarbonat (PC) oder deren Derivate. Als Material für die Karte können auch Metalle (Alu, Stahl, Edelmetalle) eingesetzt werden.

Das Substrat und die Laminierfolie werden mit einander durch eine Laminierung verbunden. Die Laminierung kann Hitze- und/oder Druckeinwirkung umfassen, die auf die flächig aneinander oder aufeinander liegende Laminierfolie und das Substrat wirken. Dabei sind für die gewählten Materialien geeignete Druck- bzw. Temperaturprofile zu wählen.

Die Laminierfolie kann aus einer oder aus mehreren Schichten bestehen, zum Beispiel einer Hologrammschicht, einer Klebeschicht, einer Schutzschicht, etc. Das Material der (oder einzelner) Schicht(en) und deren etwaigen Zuschlagstoffen begründet die Licht blockierenden Eigenschaften in bestimmten Wellenlängenbereiche. Somit kann sowohl die komplette Laminierfolie, als auch nur eine oder mehrere ihrer Schichten (UV-)Licht blockierende Eigenschaften haben. Das Material der Laminierfolie ist transparent oder opak, kann mit Hilfe eines Laserstrahls oder mechanisch graviert werden und ist "(UV-)Licht blockierend".

Wenn das Substrat und die Laminierfolie Polyethylen (PE), Polyethylenterephthalat (PET) oder Glykol-modifiziertem Polyethylenterephthalat (PETG) als Material enthalten, kann zum Beispiel bei Temperaturen im Bereich von etwa 70 °C bis etwa 160 °C, insbesondere von etwa 100 °C bis etwa 130 °C, vorzugsweise bei etwa 120 °C, laminiert werden. Bei Polycarbonat (PC) können die Temperaturen zum Beispiel im Bereich von etwa 140 °C bis etwa 260 °C, oder von etwa 180 °C bis etwa 220 °C, vorzugsweise bei etwa 200 °C liegen.

Im vorliegenden Beispiel sind sowohl die Laminierfolie 12 als auch das Substrat 10 aus Polyethylen, es sind aber auch andere Materialien / Materialpaarungen möglich.

Die der Laminierfolie 12 zugewandte Oberfläche des Substrates 10 hat erste Text-, Zahlen-14 und Bilddaten 16, die bei Beleuchtung durch Tageslicht mit bloßem Auge erkennbar sind. Des Weiteren hat die der Laminierfolie 12 zugewandte Oberfläche des Substrates 10 einen ersten Flächenbereich 18 mit einer fluoreszierenden Substanz. Diese Substanz fluoresziert unter Anregung mit Licht in einem bestimmten Wellenlängenbereich mit bloßem Auge erkennbar farbig. Der erste Flächenbereich 18 mit der fluoreszierenden Substanz ist bei Beleuchtung durch Tageslicht im Verhältnis zu seiner Umgebung auf dem Substrat 10 zumindest nahezu nicht sichtbar. Ultraviolettes Licht (UV-Licht) hat Wellenlängen zwischen etwa 100 nm und 400 nm.

Als ein Beispiel einer fluoreszierenden Substanz sei eine Strahldrucktinte genannt, die eine wässrige Flüssigkeit (60-80%) mit Zusatz von Feuchthaltemitteln (5-10%), oberflächenaktiven Substanzen (0-1%), Alkohol (10-20%) und einem wasserlöslichen optischen Aufheller (1-3%) ist. Dieser optische Aufheller zeichnet sich durch eine Anregung im kurzwelligen Bereich aus und zeigt eine Remission im sichtbaren Bereich von z. B. grün, rot oder gelb. Als Beispiel sei hier der grün fluoreszierende Wirkstoff aufgeführt: Anregung: 250 - 280nm Remissionspeaks: 400 - 500nm, 540 - 560nm, 580 - 590nm, oder der rot fluoreszierende Wirkstoff: Anregung: 250 - 290nm, Remissionspeaks: 580 - 600nm, 610 - 620nm.

Es sind aber auch andere Substanzen einsetzbar. Die vorstehenden Angaben sind als Beispiele zu verstehen; in konkreten Anwendungen können die Substanzen und die Wellenlängen hiervon auch abweichen.

Um den beschriebenen Effekt zu erzielen, können eine Reihe von Materialien verwendet werden, deren chemische Zusammensetzungen stark voneinander abweichen können. Auch ist der jeweilige Wellenlängenbereich durch die mögliche Verwendung unterschiedlicher Materialen variabel.

Die Laminierfolie 12 hat im vorliegenden Beispiel nicht nur in dem zweiten Flächenbereich 20, sondern über seine komplette Erstreckung eine Schicht 12a, die Licht in einem bestimmten Wellenlängenbereich blockiert oder zumindest abschwächt. Dieser bestimmte Wellenlängenbereich stimmt zumindest teilweise mit dem Wellenlängenbereich überein, bei dem die fluoreszierende Substanz des ersten Flächenbereiches 18 mit bloßem Auge erkennbar farbig fluoresziert.

Die Laminierfolie 12 hat einen zweiten Flächenbereich 20, der zweite Bilddaten 16' trägt.

Die in dem zweiten Flächenbereich 20 befindlichen zweiten Bilddaten 16' sind nur so wenig tief in die Licht in einem bestimmten Wellenlängenbereich blockierende oder zumindest abschwächende Schicht 12a der Laminierfolie 12 eingraviert, dass sie bei Beleuchtung mit Tageslicht im Verhältnis zu ihrer Umgebung auf der Oberfläche der Laminierfolie 12 zumindest nahezu nicht sichtbar oder von ihrer Umgebung unterscheidbar sind. Andererseits sind diese zweiten Daten so tief in die Schicht 12a eingraviert, dass die zweiten Bilddaten 16' bei Beleuchtung mit Licht eines die fluoreszierende Substanz des ersten Flächenbereiches 20 zur Fluoreszenz anregenden Wellenlängenbereichs mit bloßem Auge erkennbar sind.

Die Laminierfolie kann wenigstens in dem zweiten Flächenbereich eine Schicht haben, die Licht in einem bestimmten Wellenlängenbereich blockiert oder zumindest abschwächt. Dieser bestimmte Wellenlängenbereich kann zumindest teilweise mit dem Wellenlängenbereich übereinstimmen, bei dem die fluoreszierende Substanz des ersten Flächenbereiches mit bloßem Auge erkennbar farbig fluoresziert.

Diese Schicht kann sich auch über die gesamte Laminierfolie erstrecken. Außerdem kann diese Schicht auf die Laminierfolie aufgebracht sein oder die Laminierfolie hat als Ganzes die Eigenschaft, Licht in einem bestimmten Wellenlängenbereich zu blockieren oder zumindest abzuschwächen. Als ein Beispiel einer Schicht, die Licht in einem bestimmten Wellenlängenbereich blockiert oder zumindest abschwächt, sei Sicherheitslaminat des Typs TKO Utopia2 Specimen der Firma OVD Kinegram AG in CH-6301 Zug, Schweiz genannt. Die vorstehenden Angaben sind als Beispiele zu verstehen; in konkreten Anwendungen können die Materialen der Schichten hiervon auch abweichen.

Das Substrat kann zum Beispiel eine Dicke von etwa 100 µm bis etwa 2000 µm haben. Die Laminierfolie kann zum Beispiel eine Dicke von etwa 100 µm bis etwa 600 µm haben, wobei die Licht in einem bestimmten Wellenlängenbereich blockierende oder zumindest abschwächende Schicht eine Dicke von etwa 300 µm hat. Die vorstehend angegebenen Abmessungen sind als Beispiele zu verstehen; in konkreten Anwendungen können die Abmessungen der einzelnen Schichten hiervon auch abweichen.

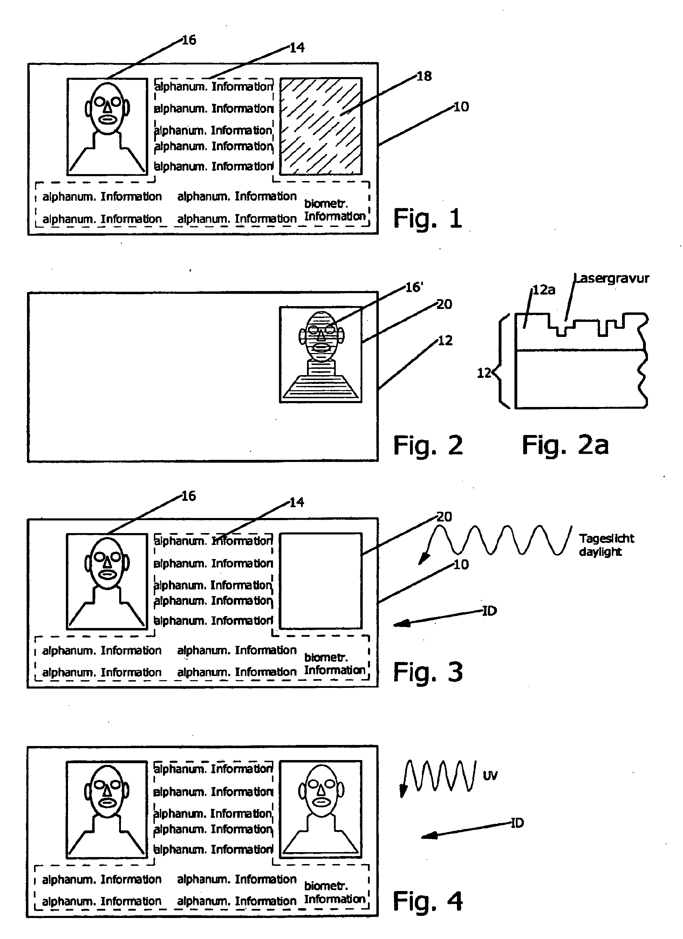

Die in dem zweiten Flächenbereich befindlichen zweiten (Bild-)daten können nur so wenig tiefgehend in die Licht in einem bestimmten Wellenlängenbereich blockierende oder zumindest abschwächende Schicht der Laminierfolie eingraviert sein, dass diese Daten bei Beleuchtung mit Tageslicht im Verhältnis zu ihrer Umgebung auf der Oberfläche der Laminierfolie zumindest nahezu nicht sichtbar sind. Die Gravurtiefe kann hier zum Beispiel etwa 5% bis etwa 35% der gesamten Dicke dieser Schicht betragen (siehe Fig. 2a). Die vorstehende Angabe ist als Beispiel zu verstehen; in konkreten Anwendungen kann die Gravurtiefe der Laminierfolie hiervon auch abweichen.

Der erste Flächenbereich 18 des Substrates 10 und der zweite Flächenbereich 20 der Laminierfolie 12 überdecken einander im vorliegenden Beispiel vollständig.

Die in dem zweiten Flächenbereich 20 befindlichen zweiten Bilddaten 16' sind als Graustufenbild in die Schicht 12a der Laminierfolie 12 eingraviert.

Das Substrat 10 und die Laminierfolie 12 tragen für das Identifikationsdokument relevante Text-, Zahlen- und / oder Bilddaten und bilden eine integrale Einheit.

Dazu ist die Laminierfolie 12 auf das Substrat 10 laminiert, so dass der erste Flächenbereich 18 des Substrates 10 und der zweite Flächenbereich 20 der Laminierfolie 12 einander zumindest teilweise überdecken.

Die zweiten Bilddaten 16' werden als Graustufenbild mit Hilfe einer Laserquelle in die Schicht 12a der Laminierfolie 12 eingraviert. Dabei befindet sich die Schicht 12a auf der von dem Substrat 12 abgewandten Seite der Laminierfolie 12.

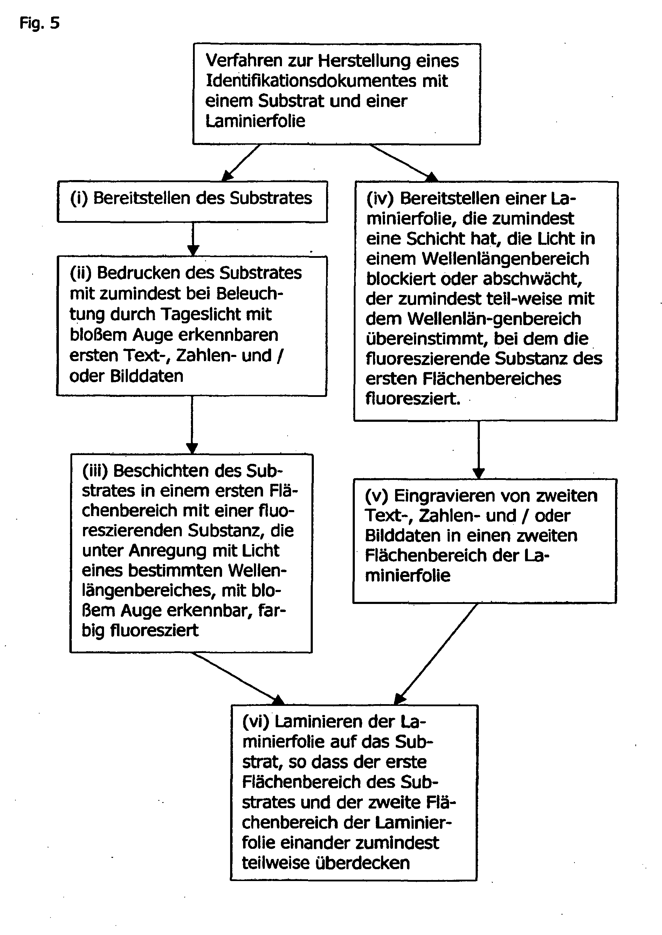

In Fig. 5 ist ein Verfahren zur Herstellung eines Identifikationsdokumentes erläutert. Es hat folgende Schritte: (i) Bereitstellen des Substrates, (ii) Bedrucken des Substrates mit zumindest bei Beleuchtung durch Tageslicht mit bloßem Auge erkennbaren ersten Text-, Zahlen-und / oder Bilddaten, (iii) Beschichten des Substrates in einem ersten Flächenbereich mit einer fluoreszierenden Substanz, die unter Anregung mit Licht in einem bestimmten Wellenlängenbereich mit bloßem Auge erkennbar farbig fluoresziert, (iv) Bereitstellen einer Laminierfolie, (v) Eingravieren von zweiten Text-, Zahlen- und / oder Bilddaten in einen zweiten Flächenbereich der Laminierfolie, und (vi) Laminieren der Laminierfolie auf das Substrat, so dass der erste Flächenbereich des Substrates und der zweite Flächenbereich der Laminierfolie einander zumindest teilweise überdecken.

In dem in Fig. 5 veranschaulichten Ablauf sind die Verarbeitung des Substrates und die Verarbeitung der Laminierfolie als parallele Teilprozesse dargestellt, die dann in dem Zusammenlaminieren des Substrates mit der Laminierfolie zusammengeführt werden und gemeinsam enden. Allerdings ist es auch möglich, diese beiden Teilprozesse nacheinander auszuführen.

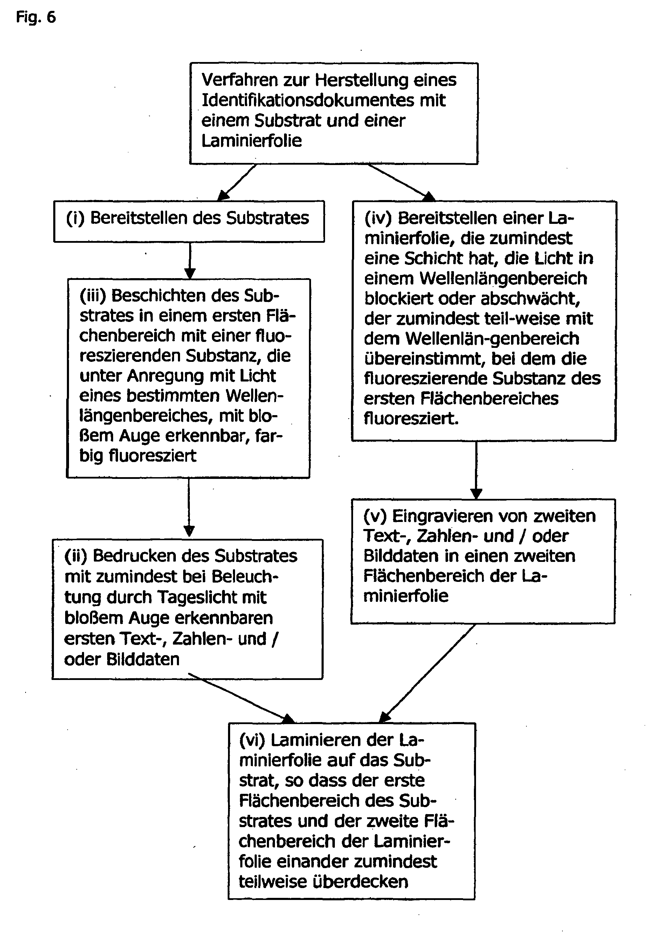

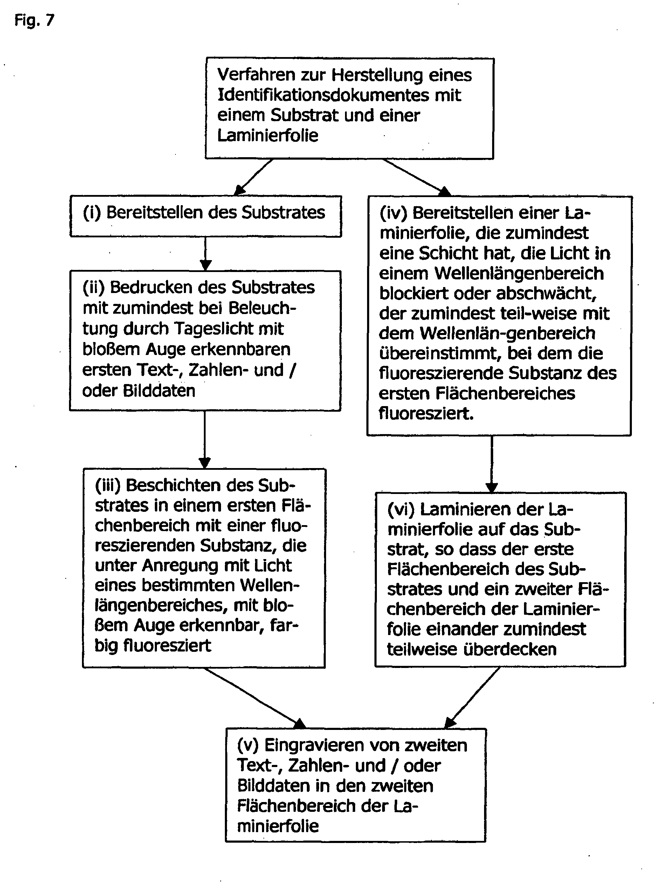

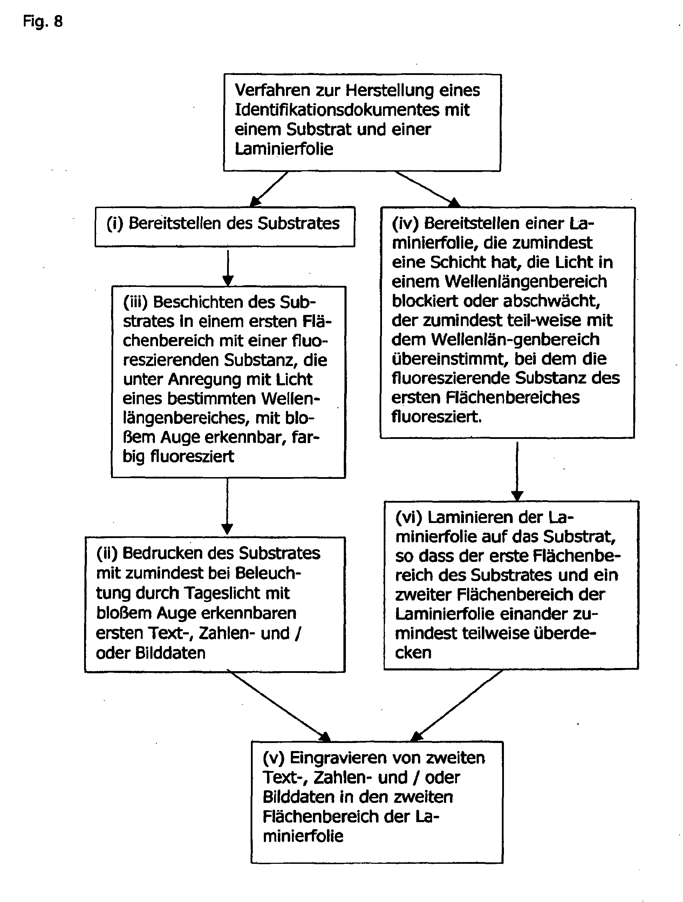

In den Fig. 6 - 8 sind weitere Varianten der Verarbeitung des Substrates und der Verarbeitung der Laminierfolie zu dem Identifikationsdokument dargestellt. Dabei zeigt Fig. 6 die vertauschte Abfolge der Schritte (ii) und (iii). Gemäß Fig. 7 ist die Abfolge der Schritte (v) und (vi) vertauscht. In Fig. 8 ist sowohl die Abfolge der Schritte (ii) und (iii) als auch die Abfolge der Schritte (v) und (vi) vertauscht.

In einer weiteren Variante kann der Schritt (iii) Beschichten des Substrates in dem ersten Flächenbereich mit einer fluoreszierenden Substanz, die unter Anregung mit Licht in einem bestimmten Wellenlängenbereich mit bloßem Auge erkennbar farbig fluoresziert, auch dadurch ersetzt sein, dass bei der Herstellung des Substrates in einem ersten Flächenbereich in das Material des Substrates eine fluoreszierende Substanz eingebettet wird, die unter Anregung mit Licht in einem bestimmten Wellenlängenbereich mit bloßem Auge erkennbar farbig fluoresziert. Es ist auch möglich, dass die Oberfläche des Substrates in dem ersten Flächenbereich eine geringfügige Vertiefung aufweist, in welche die fluoreszierende Substanz so eingebracht wird, dass sie zumindest annähernd bündig mit der Oberfläche des Substrates abschließt. Im Ergebnis ist so eine durchgehend zumindest annähernd ebene Oberfläche des Substrates erzielt. Dies hat eine glättere Oberfläche des fertig gestellten Identifikationsdokumentes zur Folge, so dass dieses Sicherheitsmerkmal mit bloßem Auge schwerer zu erkennen ist.

## Patentansprüche

1. Identifikationsdokument (ID) mit
- einem Substrat (10) und
- einer mit dem Substrat (10) verbundenen Laminierfolie (12), wobei die der Laminierfolie (12) zugewandte Oberfläche des Substrates (10)
- einen ersten Flächenbereich (18) mit einer fluoreszierenden Substanz trägt, die unter Anregung mit Licht in einem bestimmten Wellenlängenbereich mit bloßem Auge erkennbar farbig fluoresziert, und wobei
- die Laminierfolie (12) einen zweiten Flächenbereich (20) aufweist, der zweite Text-, Zahlen- und / oder Bilddaten (16') trägt, wobei die in dem zweiten Flächenbereich (20) befindlichen zweiten Text-, Zahlen- und / oder Bilddaten (16') so tief in eine Licht in einem bestimmten Wellenlängenbereich blockierende oder zumindest abschwächende Schicht (12a) der Laminierfolie (12) eingraviert sind, dass deren blockierende oder zumindest abschwächende Wirkung soweit verringert ist, dass die in dem zweiten Flächenbereich (20) befindlichen zweiten Text-, Zahlen- und / oder Bilddaten (16') bei Beleuchtung mit Licht eines die fluoreszierende Substanz des ersten Flächenbereiches (18) zur Fluoreszenz anregenden Wellenlängenbereichs mit bloßem Auge erkennbar sind und wobei
- der erste Flächenbereich (18) des Substrates (10) und der zweite Flächenbereich (20) der Laminierfolie (12) einander zumindest teilweise überdecken,
**dadurch gekennzeichnet, dass**
- das die der Laminierfolie (12) zugewandte Oberfläche des Substrats (10) zumindest bei Beleuchtung durch Tageslicht mit bloßem Auge erkennbare erste Text-, Zahlen- (14) und / oder Bilddaten (16) trägt,
- die Laminierfolie (12) Flächenabmessungen hat, die mit denen des Substrats (10) übereinstimmen oder größer sind,
- sich die Licht in einem bestimmten Wellenlängenbereich blockierende oder zumindest abschwächende Schicht (12a) über die gesamte Laminierfolie (12) erstreckt, und
- der bestimmte Wellenlängenbereich der Licht blockierenden oder zumindest abschwächenden Schicht (12a) zumindest teilweise mit dem Wellenlängenbereich übereinstimmt, bei dem die fluoreszierende Substanz des ersten Flächenbereiches (18) mit bloßem Auge erkennbar farbig fluoresziert.

2. Identifikationsdokument (ID) nach Anspruch 1, wobei der erste Flächenbereich (18) mit der fluoreszierenden Substanz bei Beleuchtung durch Tageslicht im Verhältnis zu seiner Umgebung auf dem Substrat (10) zumindest nahezu nicht sichtbar ist.

3. Identifikationsdokument (ID) nach einem der vorhergehenden Ansprüche, wobei die in dem zweiten Flächenbereich (20) befindlichen zweiten Text-, Zahlen- und / oder Bilddaten (16') nur so wenig tief in die Licht in einem bestimmten Wellenlängenbereich blockierende oder zumindest abschwächende Schicht (12a) der Laminierfolie (12) eingraviert sind, dass sie bei Beleuchtung mit Tageslicht im Verhältnis zu ihrer Umgebung auf der Oberfläche der Laminierfolie (12) zumindest nahezu nicht sichtbar sind.

4. Identifikationsdokument (ID) nach einem der vorhergehenden Ansprüche, wobei die Gravurtiefe etwa 5% bis 35% der gesamten Dicke der Licht in einem bestimmten Wellenlängenbereich blockierenden oder zumindest abschwächenden Schicht der Laminierfolie beträgt.

5. Identifikationsdokument (ID) nach einem der vorhergehenden Ansprüche, wobei die in dem zweiten Flächenbereich (20) befindlichen zweiten Text-, Zahlen- und / oder Bilddaten (16') als Graustufenbild in die Licht in einem bestimmten Wellenlängenbereich blockierende oder zumindest abschwächende Schicht (12a) der Laminierfolie (12) eingraviert sind.

6. Identifikationsdokument (ID) nach einem der vorhergehenden Ansprüche, wobei sowohl das Substrat (10) als auch die Laminierfolie (12) für das Identifikationsdokument relevante Text-, Zahlen- und / oder Bilddaten tragen und eine integrale Einheit bilden.

7. Verfahren zur Herstellung eines Identifikationsdokumentes (ID) mit einem Substrat (10) und einer Laminierfolie (12), mit folgenden Schritten:
(i) Bereitstellen des Substrates (10),
(ii) Bedrucken des Substrates (10) mit zumindest bei Beleuchtung durch Tageslicht mit bloßem Auge erkennbaren ersten Text-, Zahlen- (14) und / oder Bilddaten (16),
(iii) Beschichten des Substrates (10) in einem ersten Flächenbereich (18) mit einer fluoreszierenden Substanz, die unter Anregung mit Licht eines bestimmten Wellenlängenbereiches, mit bloßem Auge erkennbar, fluoresziert,
(iv) Bereitstellen einer Laminierfolie (12), wobei die Laminierfolie (12) Flächenabmessungen hat, die mit denen des Substrats (10) übereinstimmen oder größer sind, wobei die Laminierfolie eine Licht in einem bestimmten Wellenlängenbereich blockierende oder zumindest abschwächende Schicht (12a) aufweist, die sich über die gesamte Laminierfolie erstreckt und wobei der bestimmte Wellenlängenbereich der Licht blockierenden oder zumindest abschwächenden Schicht (12a) zumindest teilweise mit dem Wellenlängenbereich übereinstimmt, bei dem die fluoreszierende Substanz des ersten Flächenbereiches (18) mit bloßem Auge erkennbar farbig fluoresziert,
(v) Eingravieren von zweiten Text-, Zahlen- und / oder Bilddaten (16') in einem zweiten Flächenbereich (20) der Laminierfolie (12), wobei die eingravierten Text-, Zahlen- und / oder Bilddaten (16') so tief in die Licht in einem bestimmten Wellenlängenbereich blockierende oder zumindest abschwächende Schicht (12a) der Laminierfolie (12) eingraviert werden, dass die blockierende oder zumindest abschwächende Wirkung der Schicht (12a) soweit verringert ist, dass die in dem zweiten Flächenbereich (20) befindlichen zweiten Text-, Zahlen- und / oder Bilddaten (16') bei Beleuchtung mit Licht eines die fluoreszierende Substanz des ersten Flächenbereiches (20) zur Fluoreszenz anregenden Wellenlängenbereichs mit bloßem Auge erkennbar sind und
(vi) Laminieren der Laminierfolie (12) auf das Substrat (10), so dass der erste Flächenbereich (18) des Substrates (10) und der zweite Flächenbereich (20) der Laminierfolie (12) einander zumindest teilweise überdecken.

8. Verfahren zur Herstellung eines Identifikationsdokumentes (ID) nach Anspruch 7, wobei der erste Flächenbereich (18) mit der fluoreszierenden Substanz so gestaltet wird, dass er bei Beleuchtung durch Tageslicht im Verhältnis zu seiner Umgebung auf dem Substrat (10) zumindest nahezu nicht sichtbar ist.

9. Verfahren zur Herstellung eines Identifikationsdokumentes (ID) nach einem der vorhergehenden Verfahrensansprüche, wobei die in den zweiten Flächenbereich (20) eingravierten zweiten Text-, Zahlen- und / oder Bilddaten (16') nur so wenig tief in die Licht in einem bestimmten Wellenlängenbereich blockierende oder zumindest abschwächende Schicht (12a) der Laminierfolie (12) eingraviert werden, dass sie bei Beleuchtung mit Tageslicht im Verhältnis zu ihrer Umgebung auf der Laminierfolie (12) zumindest nahezu nicht sichtbar sind.

10. Verfahren zur Herstellung eines Identifikationsdokumentes (ID) nach einem der vorhergehenden Verfahrensansprüche, wobei die in den zweiten Flächenbereich (20) eingravierten zweiten Text-, Zahlen- und / oder Bilddaten (16') als Graustufenbild in die Licht in einem bestimmten Wellenlängenbereich blockierende oder zumindest abschwächende Schicht (12a) der Laminierfolie (12) eingraviert werden.

11. Identifikationsdokument (ID), hergestellt nach einem der vorhergehenden Verfahrensansprüche, wobei die in den zweiten Flächenbereich (20) eingravierten zweiten Text-, Zahlen- und / oder Bilddaten (16') eine Kopie oder eine Ergänzung zu wenigstens einem Teil der auf das Substrat (10) gedruckten ersten Text-, Zahlen- (14) und / oder Bilddaten (16) sind.

12. Verfahren zur Herstellung eines Identifikationsdokumentes (ID) nach einem der vorhergehenden Verfahrensansprüche, wobei die zweiten Text-, Zahlen- und / oder Bilddaten (16') als Graustufenbild mittels einer Laserquelle in die Schicht (12a) der Laminierfolie (12) eingraviert werden, wobei sich die Schicht (12a) auf der von dem Substrat (10) abgewandten Seite der Laminierfolie (12) befindet.

13. Verfahren zur Herstellung eines Identifikationsdokumentes (ID) nach einem der vorhergehenden Verfahrensansprüche, wobei sowohl das Substrat (10) als auch die Laminierfolie (12) für das Identifikationsdokument relevante Text-, Zahlen- und / oder Bilddaten tragen und eine integrale Einheit bilden.

14. Verfahren zur Herstellung eines Identifikationsdokumentes (ID) nach einem der vorhergehenden Verfahrensansprüche, wobei entweder
- der Schritt (ii) Bedrucken des Substrates (10) mit zumindest bei Beleuchtung durch Tageslicht mit bloßem Auge erkennbaren ersten Text-, Zahlen- (14) und / oder Bilddaten (16),
- vor dem Schritt (iii) Beschichten des Substrates (10) in einem ersten Flächenbereich (18) mit einer fluoreszierenden Substanz, die unter Anregung mit Licht eines bestimmten Wellenlängenbereiches, mit bloßem Auge erkennbar, fluoresziert
ausgeführt wird, oder
- der Schritt (iii) Beschichten des Substrates (10) in einem ersten Flächenbereich (18) mit einer fluoreszierenden Substanz, die unter Anregung mit Licht eines bestimmten Wellenlängenbereiches, mit bloßem Auge erkennbar, fluoresziert
- vor dem Schritt (ii) Bedrucken des Substrates (10) mit zumindest bei Beleuchtung durch Tageslicht mit bloßem Auge erkennbaren ersten Text-, Zahlen- (14) und / oder Bilddaten (16)
ausgeführt wird.

15. Verfahren zur Herstellung eines Identifikationsdokumentes (ID) nach einem der vorhergehenden Verfahrensansprüche, wobei entweder
- der Schritt (v) Eingravieren von zweiten Text-, Zahlen- und / oder Bilddaten (16') in einem zweiten Flächenbereich (20) der Laminierfolie (12),
- vor dem Schritt (vi) Laminieren der Laminierfolie (12) auf das Substrat (10), so dass der erste Flächenbereich (18) des Substrates (10) und der zweite Flächenbereich (20) der Laminierfolie (12) einander zumindest teilweise überdecken,
ausgeführt wird, oder
- der Schritt (vi) Laminieren der Laminierfolie (12) auf das Substrat (10), so dass der erste Flächenbereich (18) des Substrates (10) und der zweite Flächenbereich (20) der Laminierfolie (12) einander zumindest teilweise überdecken,
- vor dem Schritt (v) Eingravieren von zweiten Text-, Zahlen- und / oder Bilddaten (16') in einem zweiten Flächenbereich (20) der Laminierfolie (12),
ausgeführt wird.

## Claims

1. An identification document (ID) having
- a substrate (10) and
- a laminating film (12) bonded to the substrate (10), wherein the surface of the substrate (10) facing the laminating film (12) bears
- a first zone (18) with a fluorescent substance which fluoresces in colour in a manner detectable with the naked eye when excited with light in a specific wavelength range, and wherein
- the laminating film (12) comprises a second zone (20), which bears second text, numeric and/or image data (16'), wherein the second text, numeric and/or image data (16') located in the second zone (20) are engraved to such a depth into a layer (12a) of the laminating film (12) which blocks or at least attenuates light in a specific wavelength range that the blocking or at least attenuating effect of said layer is reduced to such an extent that the second text, numeric and/or image data (16') located in the second zone (20) are detectable with the naked eye when illuminated with light of a wavelength range which excites the fluorescent substance of the first zone (18) and causes it to fluoresce, and wherein
- the first zone (18) of the substrate (10) and the second zone (20) of the laminating film (12) overlap one another at least in part,
**characterised in that**
- the surface of the substrate (10) facing the laminating film (12) bears first text, numeric (14) and/or image data (16) detectable with the naked eye when illuminated with daylight,
- the laminating film (12) has area dimensions which correspond to or are larger than those of the substrate (10),
- the layer (12a) blocking or at least attenuating the light in a specific wavelength range extends over the entire laminating film (12), and
- the specific wavelength range of the layer (12a) blocking or at least attenuating light may correspond at least partially to the wavelength range in which the fluorescent substance of the first zone (18) fluoresces in colour in a manner detectable with the naked eye.

2. An identification document (ID) according to claim 1, wherein the first zone (18) with the fluorescent substance is at least virtually invisible relative to its surroundings on the substrate (10) when illuminated by daylight.

3. An identification document (ID) according to one of the preceding claims, wherein the second text, numeric and/or image data (16') located in the second zone (20) are engraved into the layer (12a) of the laminating film (12) which blocks or at least attenuates light in a specific wavelength range merely to such a shallow depth that, when illuminated with daylight, they are at least virtually invisible relative to their surroundings on the surface of the laminating film (12).

4. An identification document (ID) according to claim 1, wherein the depth of engraving amounts to approx. 5% to 35% of the total thickness of the layer blocking or at least attenuating light in a specific wavelength range.

5. An identification document (ID) according to one of the preceding claims, wherein the second text, numeric and/or image data (16') located in the second zone (20) are engraved as a greyscale image into the layer (12a) of the laminating film (12) which blocks or at least attenuates light in a specific wavelength range.

6. An identification document (ID) according to one of the preceding claims, wherein both the substrate (10) and the laminating film (12) bear text, numeric and/or image data relevant to the identification document and form an integral unit.

7. A method of producing an identification document (ID) with a substrate (10) and a laminating film (12), having the following steps:
(i) providing the substrate (10),
(ii) printing the substrate (10) with first text, numeric (14) and/or image data (16) detectable with the naked eye at least when illuminated by daylight,
(iii) coating the substrate (10) in a first zone (18) with a fluorescent substance, which fluoresces in a manner detectable with the naked eye when excited with light of a specific wavelength range,
(iv) providing a laminating film (12), wherein the laminating film (12) has area dimensions which correspond to or are larger than those of the substrate (10), wherein the laminating film comprises a layer (12a) which blocks or at least attenuates light in a specific wavelength range, which layer extends over the entire laminating film, and wherein the specific wavelength range of the layer (12a) blocking or at least attenuating light corresponds at least partially to the wavelength range in which the fluorescent substance of the first zone (18) fluoresces in colour in a manner detectable with the naked eye,
(v) engraving second text, numeric and/or image data (16') in a second zone (20) of the laminating film (12), wherein the engraved text, numeric and/or image data (16') are engraved to such a depth into the layer of the laminating film which blocks or at least attenuates light in a specific wavelength range that the blocking or at least attenuating effect of the layer (12a) is reduced to such an extent that the second text, numeric and/or image data (16') located in the second zone (20) are detectable with the naked eye when illuminated with light of a wavelength range which excites the fluorescent substance of the first zone (20) and causes it to fluoresce, and
(vi) applying the laminating film (12) to the substrate (10) by lamination, such that the first zone (18) of the substrate (10) and the second zone (20) of the laminating film (12) overlap one another at least partially.

8. A method of producing an identification document (ID) according to claim 7, wherein the first zone (18) with the fluorescent substance is configured such that it is at least virtually invisible relative to its surroundings on the substrate (10) when illuminated by daylight.

9. A method of producing an identification document (ID) according to one of the preceding method claims, wherein the second text, numeric and/or image data (16') engraved into the second zone (20) are engraved into the layer (12a) of the laminating film (12) which blocks or at least attenuates light in a specific wavelength range merely to such a shallow depth that, when illuminated with daylight, they are at least virtually invisible relative to their surroundings on the surface of the laminating film (12).

10. A method of producing an identification document (ID) according to one of the preceding method claims, wherein the second text, numeric and/or image data (16') engraved into the second zone (20) are engraved as a greyscale image into the layer (12a) of the laminating film (12) which blocks or at least attenuates light in a specific wavelength range.

11. An identification document (ID), produced according to one of the preceding method claims, wherein the second text, numeric and/or image data (16') engraved into the second zone are a copy of or a supplement to at least some of the first text, numeric (14) and/or image data (16) printed onto the substrate.

12. A method of producing an identification document (ID) according to one of the preceding method claims, wherein the second text, numeric and/or image data (12a) are engraved into the layer (12a) of the laminating film (12) as a greyscale image by means of a laser source, wherein the layer (12a) is located on the side of the laminating film (12) remote from the substrate (10).

13. A method of producing an identification document (ID) according to one of the preceding method claims, wherein both the substrate (10) and the laminating film (12) bear text, numeric and/or image data relevant to the identification document and form an integral unit.

14. A method of producing an identification document (ID) according to one of the preceding method claims, wherein either
- step ii) printing the substrate (10) with first text, numeric (14) and/or image data (16) detectable with the naked eye at least when illuminated by daylight
- is carried out prior to step iii) coating the substrate (10) in a first zone (18) with a fluorescent substance, which fluoresces in a manner detectable with the naked eye when excited with light in a specific wavelength range,
or
- step iii) coating the substrate (10) in a first zone (18) with a fluorescent substance, which fluoresces in a manner detectable with the naked eye when excited with light in a specific wavelength range
- is carried out prior to step ii) printing the substrate with first text, numeric (14) and/or image data (16) detectable with the naked eye at least when illuminated by daylight.

15. A method of producing an identification document (ID) according to one of the preceding method claims, wherein either
- step v) engraving second text, numeric and/or image data (16') in a second zone (20) of the laminating film (12)
- is carried out prior to step vi) applying the laminating film (12) to the substrate (10) by lamination, such that the first zone (18) of the substrate (10) and the second zone (20) of the laminating film (12) overlap one another at least partially,
or
- step vi) applying the laminating film (12) to the substrate (10) by lamination, such that the first zone (18) of the substrate (10) and the second zone (20) of the laminating film (12) overlap one another at least partially
- is carried out prior to step v) engraving second text, numeric and/or image data (16') in a second zone (20) of the laminating film (12).

## Revendications

1. Document d'identification (ID) comprenant
- un substrat (10) et
- une feuille à laminer (12) reliée audit substrat (10), la surface du substrat (10) tournée vers la feuille à laminer (12) présentant
- une première zone locale (18) comportant une substance fluorescente qui, sous excitation lumineuse dans une plage de longueurs d'onde bien définie, émet une couleur fluorescente observable à l'oeil nu, et
- ladite feuille à laminer (12) présentant une deuxième zone locale (20) qui supporte des deuxièmes données constituées par du texte, des chiffres et / ou des images (16'), ces deuxièmes données texte, chiffres et / ou images (16') se trouvant dans ladite deuxième zone locale (20) étant gravées si profondément dans une couche (12a) de la feuille à laminer (12) bloquant ou pour le moins atténuant la lumière dans une plage de longueurs d'onde bien définie que son effet bloquant ou pour le moins atténuant est diminué de telle sorte que les données texte, chiffres et / ou images (16') se trouvant dans la deuxième zone locale (20) sont observables à l'oeil nu lorsqu'elles sont éclairées par une lumière d'une longueur d'onde comprise dans une plage bien définie qui provoque la fluorescence de la substance fluorescente de la première zone locale (18), et
- ladite première zone locale (18) du substrat (10) et ladite deuxième zone locale (20) de la feuille à laminer (12) se recouvrant au moins partiellement l'une l'autre,
**caractérisé en ce que**
- la surface du substrat (10) tournée vers la feuille à laminer (12) supporte des premières données constituées par du texte, des chiffres (14) et/ ou des images (16) observables à l'oeil nu sous éclairage naturel, et la feuille à laminer (12) possède des dimensions surfaciques qui correspondent à celles du substrat (10) ou sont supérieures à celles-ci,
- ladite couche (12a) bloquant ou pour le moins atténuant la lumière dans une plage de longueurs d'onde bien définie s'étend sur toute la feuille à laminer (12), et
- la plage de longueurs d'onde bien définie de la couche (12a) bloquant ou pour le moins atténuant la lumière correspond au moins partiellement à la plage de longueurs d'onde dans laquelle la substance fluorescente de la première zone locale (18) émet une couleur fluorescente observable à l'oeil nu.

2. Document d'identification (ID) selon la revendication 1, la première zone locale (18) comprenant la substance fluorescente étant, sous éclairage naturel, pour le moins presque invisible par rapport à son environnement sur le substrat (10).

3. Document d'identification (ID) selon l'une des revendications précédentes,
les deuxièmes données texte, chiffres et / ou images (16') se trouvant dans la deuxième zone locale (20) étant gravées si peu profondément dans la couche (12a) de la feuille à laminer (12) bloquant ou pour le moins atténuant la lumière dans une plage de longueurs d'onde bien définie qu'elles sont, sous éclairage naturel, pour le moins presque invisibles par rapport à leur environnement sur la surface de la feuille à laminer (12).

4. Document d'identification (ID) selon l'une des revendications précédentes,
la profondeur de gravure s'élevant à environ à 5 % - 35% de l'épaisseur totale de la couche de la feuille à laminer bloquant ou pour le moins atténuant la lumière dans une plage de longueurs d'onde bien définie.

5. Document d'identification (ID) selon l'une des revendications précédentes,
les deuxièmes données texte, chiffres et / ou images (16') se trouvant dans la deuxième zone locale (20) sont gravées en plusieurs niveaux de gris dans la couche (12a) de la feuille à laminer (12) bloquant ou pour le moins atténuant la lumière dans une plage de longueurs d'onde bien définie.

6. Document d'identification (ID) selon l'une des revendications précédentes,
aussi bien le substrat (10) que la feuille à laminer (12) supportant des données texte, chiffres et / ou images (16') pertinentes pour le document d'identification (ID) et forment une unité intégrale.

7. Procédé pour la fabrication d'un document d'identification (ID) doté d'un substrat (10) et d'une feuille à laminer (12), comportant les étapes suivantes :
(i) la mise à disposition du substrat (10),
(ii) l'impression sur le substrat (10) de premières données texte, chiffres (14) et / ou images (16) observables à l'oeil nu pour le moins sous éclairage naturel,
(iii) l'application sur le substrat (10), dans une première zone locale (18), d'une substance fluorescente qui, sous excitation lumineuse dans une plage de longueurs d'onde bien définie, émet une fluorescence observable à l'oeil nu,
(iv) la mise à disposition d'une feuille à laminer (12), cette feuille à laminer (12) possédant des dimensions surfaciques qui correspondent à celles du substrat (10) ou sont supérieures à celles-ci, et présentant une couche (12a) qui bloque ou pour le moins atténue la lumière dans une plage de longueurs d'onde bien définie et qui s'étend sur toute la feuille à laminer, et la plage de longueurs d'onde bien définie de la couche (12a) bloquant ou pour le moins atténuant la lumière correspondant au moins partiellement à la plage de longueurs d'onde dans laquelle la substance fluorescente de la première zone locale (18) émet une couleur fluorescente observable à l'oeil nu,
(v) la gravure de deuxièmes données constituées par du texte, des chiffres et / ou des images (16') dans une deuxième zone locale (20) de la feuille à laminer (12), ces données texte, chiffres et / ou images (16') étant gravées si profondément dans la couche (12a) de la feuille à laminer (12) bloquant ou pour le moins atténuant la lumière dans une plage de longueurs d'onde bien définie que l'effet bloquant ou pour le moins atténuant de la couche (12a) est diminué de telle sorte que lesdites données texte, chiffres et / ou images (16') se trouvant dans la deuxième zone locale (20) sont observables à l'oeil nu lorsqu'elles sont éclairées par une lumière d'une longueur d'onde comprise dans une plage bien définie qui provoque la fluorescence de la substance fluorescente de la première zone locale (20), et
(vi) la lamination de la feuille à laminer (12) sur le substrat (10) de sorte que la première zone locale (18) du substrat (10) et la deuxième zone locale (20) de la feuille à laminer (12) se recouvrent au moins partiellement l'une l'autre.

8. Procédé pour la fabrication d'un document d'identification (ID) selon la revendication 7, la première zone locale (18) comprenant la substance fluorescente étant conçue de telle sorte qu'elle est, sous éclairage naturel, pour le moins presque invisible par rapport à son environnement sur le substrat (10).

9. Procédé pour la fabrication d'un document d'identification (ID) selon l'une des revendications précédentes, les deuxièmes données texte, chiffres et / ou images (16') gravées dans la deuxième zone locale (20) étant gravées si peu profondément dans la couche (12a) de la feuille à laminer (12) bloquant ou pour le moins atténuant la lumière dans une plage de longueurs d'onde bien définie qu'elles sont, sous éclairage naturel, pour le moins presque invisibles par rapport à leur environnement sur la surface de la feuille à laminer (12).

10. Procédé pour la fabrication d'un document d'identification (ID) selon l'une des revendications précédentes, les deuxièmes données texte, chiffres et / ou images (16') gravées dans la deuxième zone locale (20) étant gravées en plusieurs niveaux de gris dans la couche (12a) de la feuille à laminer (12) bloquant ou pour le moins atténuant la lumière dans une plage de longueurs d'onde bien définie.

11. Document d'identification (ID) fabriqué selon l'une des revendications précédentes, les deuxièmes données constituées par du texte, des chiffres et / ou des images (16') gravées dans la deuxième zone locale (20) étant une copie ou un complément à au moins une partie des premières données de texte, de chiffre (14) et / ou d'image (16) imprimées sur le substrat (10).

12. Procédé pour la fabrication d'un document d'identification (ID) selon l'une des revendications précédentes, les deuxièmes données texte, chiffres et / ou images (16') étant gravées en plusieurs niveaux de gris à l'aide d'une source laser dans la couche (12a) de la feuille à laminer (12), cette couche (12a) se trouvant sur la face de la feuille à laminer (12) opposée au substrat (10).

13. Procédé pour la fabrication d'un document d'identification (ID) selon l'une des revendications précédentes, aussi bien le substrat (10) que la feuille à laminer (12) supportant des données texte, chiffres et / ou images pertinentes pour le document d'identification (ID) et formant une unité intégrale.

14. Procédé pour la fabrication d'un document d'identification (ID) selon l'une des revendications précédentes, dans le cadre duquel
- soit l'étape (ii) de l'impression sur le substrat (10) de premières données texte, chiffres (14) et / ou image (16) observables à l'oeil nu pour le moins sous éclairage naturel, est effectuée
- avant l'étape (iii) de l'application sur le substrat (10), dans une première zone locale (18), d'une substance fluorescente qui, sous excitation lumineuse dans une plage de longueurs d'onde bien définie, émet une fluorescence observable à l'oeil nu,
- soit l'étape (iii) de l'application sur le substrat (10), dans une première zone locale (18), d'une substance fluorescente qui, sous excitation lumineuse dans une plage de longueurs d'onde bien définie, émet une fluorescence observable à l'oeil nu, est effectuée
- avant l'étape (ii) de l'impression sur le substrat (10) de premières données texte, chiffres (14) et / ou images (16) observables à l'oeil nu pour le moins sous éclairage naturel.

15. Procédé pour la fabrication d'un document d'identification (ID) selon l'une des revendications précédentes, dans le cadre duquel
- soit l'étape (v) de la gravure de deuxièmes données texte, chiffres et / ou images (16') dans une deuxième zone locale (20) de la feuille à laminer (12), est effectuée
- avant l'étape (vi) de la lamination de la feuille à laminer (12) sur le substrat (10) de sorte que la première zone locale (18) du substrat (10) et la deuxième zone locale (20) de la feuille à laminer (12) se recouvrent au moins partiellement l'une l'autre,
- soit l'étape (vi) de la lamination de la feuille à laminer (12) sur le substrat (10) de sorte que la première zone locale (18) du substrat (10) et la deuxième zone locale (20) de la feuille à laminer (12) se recouvrent au moins partiellement l'une l'autre, est effectuée
- avant l'étape (v) de la gravure de deuxièmes données texte, chiffres et / ou images (16') dans une deuxième zone locale (20) de la feuille à laminer (12).
